# EUROPEAN PATENT SPECIFICATION

(11) **EP 4 342 719 B1**
(45) Date of publication and mention of the grant of the patent: **26.11.2025**
(21) Application number: 22863511.6
(22) Date of filing: 31.08.2022
(51) Int. Cl.: B60L 3/00, B60L 3/04, B60L 53/16, B60L 53/31, H01H 50/24, H01H 50/60, H01H 50/64, H01H 51/22, H01H 50/14

(54) **CONTACTOR FOR VEHICLE, VEHICLE CHARGING AND POWER DISTRIBUTION SYSTEM, CHARGING PILE, AND VEHICLE**
KONTAKTOR FÜR FAHRZEUG, FAHRZEUGLADE- UND STROMVERTEILUNGSSYSTEM, LADESÄULE UND FAHRZEUG
CONTACTEUR POUR VÉHICULE, SYSTÈME DE CHARGE ET DE DISTRIBUTION DE PUISSANCE DE VÉHICULE , BORNE DE CHARGE ET VÉHICULE

(30) Priority: 03.09.2021 CN 202111032856
(43) Date of publication of application: 27.03.2024
(73) Proprietor: BYD Company Limited, Shenzhen, Guangdong 518118 (CN)
(72) Inventor: HUANG, Tuodi, Shenzhen, Guangdong 518118 (CN); WANG, Xuechao, Shenzhen, Guangdong 518118 (CN); SHI, Lei, Shenzhen, Guangdong 518118 (CN); YAN, Dengyan, Shenzhen, Guangdong 518118 (CN); LIU, Qing, Shenzhen, Guangdong 518118 (CN)
(74) Representative: Dehns Germany Partnerschaft mbB
(86) International application number: PCT/CN2022/116147
(87) International publication number: WO 2023/030376

(56) References cited:
- CN-A- 102 592 864
- CN-A- 107 564 770
- CN-A- 111 863 538
- CN-U- 206 727 022
- CN-U- 209 804 561
- CN-U- 215 751 973
- DE-A1- 102012 000 313
- JP-A- 2012 151 090
- JP-U- S5 589 247
- JP-U- S58 127 549
- KR-A- 20120 079 007
- US-A1- 2003 052 759

## Description

### FIELD

The present invention relates to the technical field of contactors, and more specifically, to a contactor for a vehicle, a vehicle charging and power distribution system, a charging pile, and a vehicle.

### BACKGROUND

Contactors as electric control members for controlling on/off of circuits are applied widely. A contactor in a related technology includes an electromagnetic mechanism, a spring plate component, a fixed contact, and a moving contact arranged sequentially in a length direction. That is to say, the moving contact, a conducting bar, a driving assembly, and the like of the existing contactor are arranged sequentially in the length direction of the contactor. The overall structure is long, the space occupation is large, and the structural strength is low. During use, the contactor has a high risk of fracture under the impact of vibration or the like, and consequently has a short service life and cannot be used as an automotive-grade contactor.

For example, document US 2003/052759 A1 discloses an electromagnetic relay provided with an iron core which has a virtually J-letter shape on a plan view with one end serving as a support-receiving portion and the other end serving as a magnetic pole portion, and a movable iron member which is supported by a movable contact member attached to a corner thereof, and has a virtually L-letter shape on a plan view with one end being supported on the support-receiving portion of the iron core so as to freely pivot thereon and an adsorb portion that is the other end being allowed to face the magnetic pole portion of the iron core so as to be adsorbed thereon.

### SUMMARY

The present invention relates to a contactor for a vehicle, a vehicle charging and power distribution system, a charging pile, and a vehicle with the features of the independent claims. The present invention is intended to resolve at least one of the technical problems existing in the related art. Therefore, an objective of the present invention is to provide a contactor. The contactor is more proper in structure, proper in space occupation, high in structural stability, and long in service life.

The present invention further provides a vehicle charging and power distribution system for which the foregoing contactor is used.

The present invention further provides a charging pile for which the foregoing contactor is used.

The present invention further provides a vehicle for which the foregoing contactor is used.

A contactor according to the present invention includes: a first wiring terminal and a second wiring terminal; a conducting bar, the conducting bar including: a first conduction section and a second conduction section, the first conduction section and the second conduction section being connected to each other and being revolvable with respect to each other, the first conduction section being fixed on the first wiring terminal, and the second conduction section being optionally electrically connected to or electrically disconnected from the second wiring terminal; and a driving assembly, the driving assembly being configured to drive the second conduction section to move toward or away from the second wiring terminal, where the first wiring terminal and the second wiring terminal are respectively arranged opposite to the conducting bar in a first direction, and at least one of the conducting bar, the first wiring terminal, and the second wiring terminal is arranged opposite to the driving assembly in a second direction.

**In** the contactor according to the present invention, the conducting bar is arranged opposite to the first wiring terminal and the second wiring terminal in the first direction, and the driving assembly is arranged opposite to the conducting bar in the second direction, so that the space occupation of the contactor can be improved, to make the overall length of the contactor smaller, and the overall structural strength of the contactor can be increased, to reduce a probability that the contactor is prone to fracture from the middle after being used for a vehicle and vibrated for a long time, thereby prolonging the service life of the contactor.

A vehicle charging and power distribution system according to the present invention includes: a positive contactor, a negative contactor, and a pre-charging circuit contactor, one or more of the positive contactor, the negative contactor, and the pre-charging circuit contactor being constructed as the contactor according to any one of the foregoing examples.

A charging pile according to the present invention includes the foregoing contactor.

A vehicle according to the present invention includes the foregoing contactor.

Other aspects and advantages of the present invention will be given in the following description, some of which will become apparent from the following description or may be learned from practices of the present invention.

### BRIEF DESCRIPTION OF THE DRAWINGS

FIG. 1 is a schematic diagram of a contactor according to a first embodiment of the present invention;
FIG. 2 is a schematic three-dimensional diagram of a contactor in a first position according to a first embodiment of the present invention;
FIG. 3 is a top view of a contactor in a first position according to a first embodiment of the present invention;
FIG. 4 is a schematic three-dimensional diagram of a contactor in a second position according to a first embodiment of the present invention;
FIG. 5 is a top view of a contactor in a first position according to a second embodiment of the present invention;
FIG. 6 is a state diagram of a driving assembly of a contactor in a first position according to a first embodiment of the present invention;
FIG. 7 is a state diagram of a driving assembly of a contactor in a second position according to a first embodiment of the present invention;
FIG. 8 is a schematic diagram of a contactor according to a second embodiment of the present invention;
FIG. 9 is a schematic diagram of a driving assembly of a contactor according to a second embodiment of the present invention;
FIG. 10 is a schematic sectional view of a contactor according to an embodiment of the present invention;
FIG. 11 is a schematic diagram of a vehicle charging and power distribution system according to an embodiment of the present invention;
FIG. 12 is a schematic diagram of a vehicle according to an embodiment of the present invention;
FIG. 13 is a schematic diagram of an operating circuit of a sensor used for the present invention;
FIG. 14 is a schematic diagram of a charging pile according to an embodiment of the present invention;
FIG. 15 shows a micro-switch with a structure according to an embodiment of the present invention; and
FIG. 16 shows a micro-switch with another structure according to an embodiment of the present invention.

### DETAILED DESCRIPTION

The following describes embodiments of the present invention in detail. Examples of the embodiments are shown in the accompanying drawings, and same or similar reference signs in all the accompanying drawings indicate same or similar components or components having same or similar functions. The embodiments described below with reference to the accompanying drawings are exemplary and used merely for explaining the present invention, and should not be construed as a limitation on the present invention.

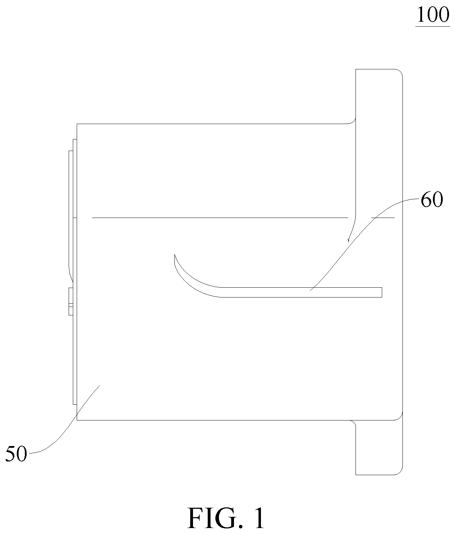

A contactor 100 according to an embodiment of the present invention will be described below with reference to FIG. 1 to FIG. 16.

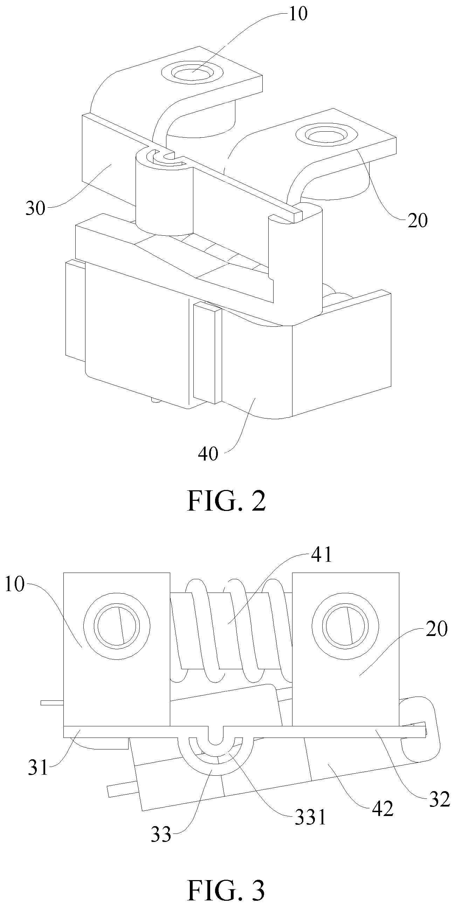

As shown in FIG. 2 to FIG. 5, and FIG. 8, the contactor 100 according to this embodiment of the present invention includes: a first wiring terminal 10, a second wiring terminal 20, a conducting bar 30, and a driving assembly 40.

The conducting bar 30 includes: a first conduction section 31 and a second conduction section 32, the first conduction section 31 and the second conduction section 32 being connected to each other and being revolvable with respect to each other, the first conduction section 31 being fixed on the first wiring terminal 10, and the second conduction section 32 being optionally electrically connected to or electrically disconnected from the second wiring terminal 20; and the driving assembly 40 being configured to drive the second conduction section 32 to move toward or away from the second wiring terminal 20, where the first wiring terminal 10 and the second wiring terminal 20 are respectively arranged opposite to the conducting bar 30 in a first direction, at least one of the conducting bar 30, the second wiring terminal 20, and the first wiring terminal 10 is arranged opposite to the driving assembly 40 in a second direction, and the first direction is orthogonal to the second direction.

The first wiring terminal 10 is optionally electrically connected to or electrically disconnected from the second wiring terminal 20 through the conducting bar 30, and the driving assembly 40 is configured to drive the conducting bar 30 to move between a first position and a second position, to implement conduction and disconnection between the first wiring terminal 10 and the second wiring terminal 20. To be specific, the first position corresponds to a position in which the first wiring terminal 10 is conducted to the second wiring terminal 20, and the second position corresponds to a position in which the first wiring terminal 10 is disconnected from the second wiring terminal 20.

It should be noted that, that the first conduction section 31 and the second conduction section 32 are revolvable with respect to each other means that, the two may implement relative rotation by connecting to a conductible and revolvable connection structure, or may implement relative rotation by connecting to a flexible structural member (that is, the conducting bar 30 is at least partially constructed as a flexible structure) and by bending the flexible structure, or may implement relative rotation by constructing the whole conducting bar 30 as a flexible member and by bending the flexible member. With the foregoing structure, when the second conduction section 32 is rotating, the bending wear of the conducting bar 30 is smaller, so that the service life of the conducting bar 30 can be prolonged, to increase the service life of the contactor 100.

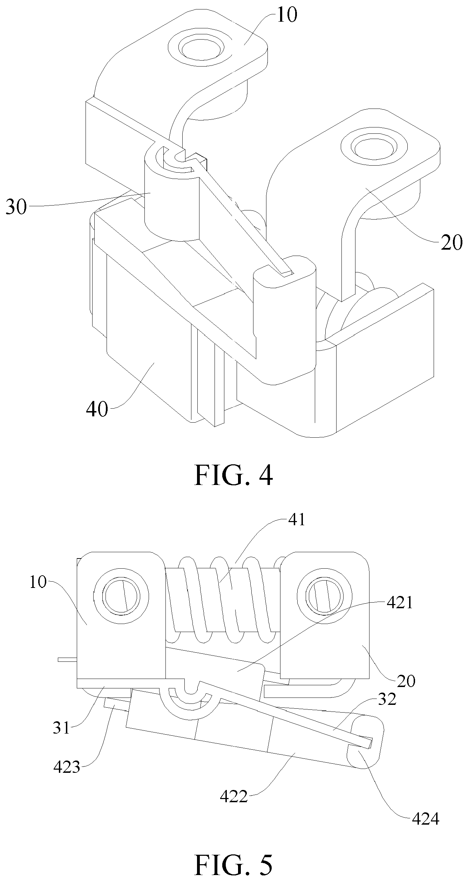

Then, referring to FIG. 2 and FIG. 4, the conducting bar 30 is arranged opposite to the first wiring terminal 10 and the second wiring terminal 20 in the first direction, and the conducting bar 30 is arranged opposite to the driving assembly 40 in the second direction. For example, the first direction corresponds to a length direction or width direction on a horizontal plane, and the second direction corresponds to a height direction. Therefore, the first wiring terminal 10, the second wiring terminal 20, and the conducting bar 30 are arranged at a same height, and the driving assembly 40 is located above or below the conducting bar 30, to reduce the size of the contactor 100 in the height direction.

**In** the contactor 100 according to this embodiment of the present invention, the conducting bar 30 is arranged opposite to the first wiring terminal 10 and the second wiring terminal 20 in the first direction, and the driving assembly 40 is arranged opposite to the conducting bar 30 in the second direction, so that the space occupation of the contactor 100 can be improved, to make the overall length of the contactor 100 smaller, and the overall structural strength of the contactor 100 can be increased, to reduce a probability that the contactor 100 is prone to fracture from the middle after being used in a use environment where the contactor is vibrated for a long time such as a vehicle 10000, thereby prolonging the service life of the contactor 100.

In addition, through the foregoing arrangement, layered arrangement for the contactor 100 may be implemented, and high-voltage and low-voltage isolation may be implemented (an upper layer is a high-voltage conduction part, and a lower layer is a low-voltage control part), so that an arc-extinguishing manner is no longer limited to a form of collaboration between an inert gas and magnetic blowout arc-extinguishing, or may be implemented in a manner of overall wetting of an insulting liquid, or no arc-extinguishing structure is arranged. Based on diversified arc-extinguishing manners, it is unnecessary to perform insulting isolation on the driving assembly 40 and a chamber, which may resolve a low-voltage failure problem. In addition, it is unnecessary to inject an inert gas, and it is unnecessary to manufacture the contactor 100 with a ceramic and metal brazing technique, which may further simplify the manufacturing technique of the contactor 100 and reduce material manufacturing processes, and may reduce the manufacturing costs of the contactor 100 while increasing the production efficiency.

That the first wiring terminal 10 is fixed to the first conduction section 31 and the second wiring terminal 20 is optionally electrically connected to the second conduction section 32 may also reduce the quantity of moving contacts, reduce a high-voltage power consumption problem caused by the moving contacts, reduce the arcing quantity, and reduce adhesion points, and may further reduce action wear generated when the contactor 100 performs circuit control, which are summarized as reducing risk points and power loss.

When the contactor 100 is operating, the second conduction section 32 impacts the second wiring terminal 20, to generate an operating noise. To reduce the operating noise of the contactor 100, the conducting bar 30 of the present invention may be constructed as a flexible member, and may be made of a flexible metal material (for example, a soft copper composite material or a soft silver composite material), to reduce the impacting noise and improve the use experience of the contactor 100. In addition, the use of the flexible metal material may increase the current, and may also reduce a contact resistance between the second wiring terminal 20 and the conducting bar 30, to reduce an adhesion probability of the two.

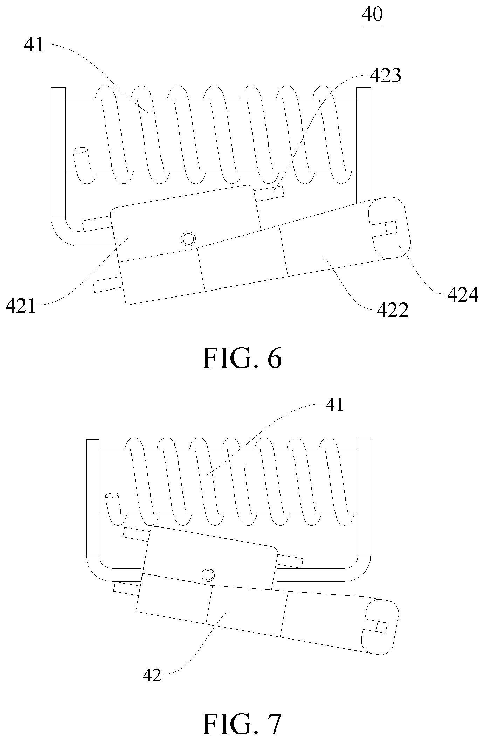

As shown in FIG. 6 and FIG. 7, according to some embodiments of the present invention, the driving assembly 40 includes: a micro-switch 42 and a driving coil 41, the micro-switch 42 is arranged opposite to the driving coil 41 in the first direction, the micro-switch 42 is configured to swing about a fixed axis under action of a magnetic force of the driving coil 41, the micro-switch is configured to drive the second conduction section 32 with a magnetic force to move toward or away from the second wiring terminal 20, the driving coil 41 is arranged opposite to the first wiring terminal 10 and the second wiring terminal 20 in the second direction, and the micro-switch 42 is arranged opposite to the conducting bar 30 in the second direction.

The micro-switch 42 is arranged opposite to the driving coil 41 in the first direction, the magnetic force generated by the driving coil 41 may drive the micro-switch 42 to rotate about the fixed axis, the micro-switch 42 is connected to and arranged opposite to the conducting bar 30 in the second direction to make it convenient to drive the conducting bar 30 to move, and the first wiring terminal 10 and the second wiring terminal 20 are both located above or below the driving coil 41, thereby facilitating high-voltage and low-voltage isolation of the low-voltage control part from the high-voltage conduction part.

As shown in FIG. 6 to FIG. 9, the micro-switch 42 includes: a driving platform 421 and a connection bracket 422, an end of the connection bracket 422 is connected to the driving platform 421, another end of the connection bracket 422 is connected to the second conduction section 32, the driving platform 421 is configured to swing under action of a magnetic force of the driving coil 41, and the driving platform 421 is configured to drive the connection bracket 422 to swing and then drive the second conduction section 32 to move toward or away from the second wiring terminal 20.

That is to say, through collaboration between the driving platform 421 and the driving coil 41, the micro-switch 42 rotates about the fixed axis, the connection bracket 422 is arranged above the driving platform 421, the connection bracket 422 and the driving platform 421 are integrally formed or are fixedly connected to each other, the driving platform 421 may rotate in synchronization with the connection bracket 422, and the connection bracket 422 is connected to the second conduction section 32, to drive the second conduction section 32 to swing relative to the first conduction section 31, thereby improving movement smoothness of the conducting bar 30.

**In** some embodiments, a connection area between the first conduction section 31 and the second conduction section 32 is arranged opposite to the driving platform 421 in the second direction, so that swinging synchronism of the driving platform 421 and the first conduction section 31 is higher, which may increase control precision, and the arrangement of the contactor 100 is more compact, which may increase the integration level of the contactor 100.

**In** some embodiments, a connection area between the first conduction section 31 and the second conduction section 32 is arranged opposite to a rotation center of the micro-switch 42 in the second direction, that is, a swinging center of the second conduction section 32 and a rotation center of the driving platform 421 (that is, the rotation center of the micro-switch 42) are coaxial, thereby improving the movement synchronism of the two, the control precision, and the structural integration level.

**In** some embodiments, the another end of the connection bracket 422 is connected to an end of the second conduction section 22 away from the first conduction section 21, or the another end of the connection bracket 422 is connected to another end of the second conduction section 22 close to the first conduction section 21.

That is to say, in some embodiments, the connection bracket 422 is connected to an end of the second conduction section 22 away from the first conduction section 21, to drive the second conduction section 22 to move toward or away from the second wiring terminal 20. In some other embodiments, the connection bracket 422 is connected to an end of the second conduction section 22 close to the first conduction section 21, to drive the second conduction section 22 to move toward or away from the second wiring terminal 20.

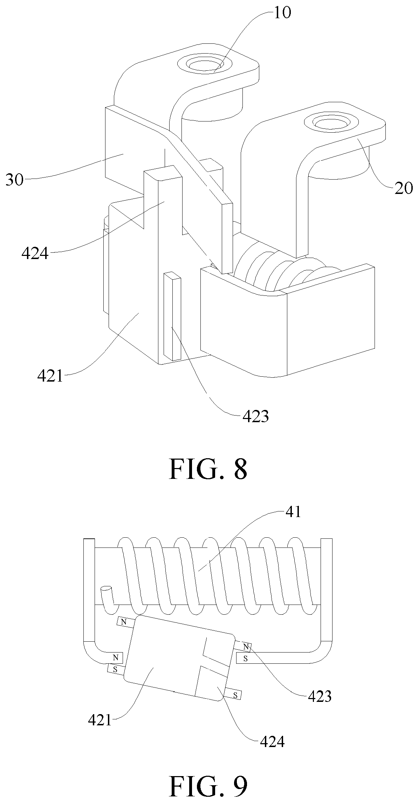

In some embodiments, a clamping piece 424 is formed at another end of the connection bracket 422. In the first embodiment shown in FIG. 6 and FIG. 7, the clamping piece 424 clamps an end of the second conduction section 32 away from the first conduction section 31, to effectively increase the travel of the micro-switch 42; or, in the second embodiment shown in FIG. 8 and FIG. 9, the clamping piece 424 clamps another end of the second conduction section 32 close to the first conduction section 31. Compared with the first embodiment, in the second embodiment, a smaller length between two ends of the connection bracket 422 may be set, so that the volume of the connection bracket 422 is smaller, thereby facilitating lightweight and compact arrangement of the contactor 100.

As shown in FIG. 6 and FIG. 7, a permanent magnet 423 is arranged on each of four corner areas of the driving platform 421, a magnetically conductive plate is arranged at each of two ends of the driving coil 41, the magnetically conductive plate at an end of the driving coil 41 is configured to attract the two permanent magnets at an end of the driving platform 421, the magnetically conductive plate at another end of the driving coil 41 is configured to attract the two permanent magnets at another end of the driving platform 421, and inner sides of the two permanent magnets 423 located at a same end of the driving platform 421 have opposite polarities.

It may be understood that, after the driving coil 41 is electrified, polarities of the magnetically conductive plates at the two ends are mutually different, and polarities of two permanent magnets 423 that are located at an end on a same side corresponding to the driving coil 41 are mutually different, so that an end of the driving platform 421 may move toward the driving coil 41, and correspondingly another end moves away from the driving coil 41.

Certainly, the structure of the present invention is not limited thereto. Alternatively, two permanent magnets 423 may be arranged at an end of the driving platform 421, or one permanent magnet 423 is arranged at each of two ends, so that the permanent magnets 423 are correspondingly located on corner areas, and then the micro-switch 42 may be driven to rotate under action of a polar attraction or polar repulsion.

In this way, by arranging the permanent magnets 423, the contactor 100 may have the operating state maintained through magnetic attraction of the permanent magnets 423, that is, reside in the first position or the second position, and the driving coil 41 of the low-voltage control part does not need to be continuously electrified, to reduce the low-voltage loss and improve the energy consumption ratio of the contactor 100.

In the embodiment shown in FIG. 3, a distance between a free end of the permanent magnet 423 and a rotation center of the micro-switch 42 is less than a distance between a contact point between the second wiring terminal 20 and the second conduction section 32 and the rotation center of the micro-switch 42.

That is to say, a distance from an end of the permanent magnet 423 to the rotation center of the micro-switch 42 is L1; and a distance between a contact point between the second wiring terminal 20 and the second conduction section 32 and the rotation center of the micro-switch 42 is L2, and L1<L2. In this way, the movement travel of the second conduction section 22 is greater than the movement travel of the micro-switch 42, and the travel of the micro-switch 42 may be increased, to meet an electric clearance requirement of a high-voltage circuit to which the contactor 100 is connected.

As shown in FIG. 9, FIG. 15, and FIG. 16, in an embodiment, the driving assembly 40 further includes a rotation shaft, and the driving platform 421 is connected to the rotation shaft and is configured to rotate about the rotation shaft; the permanent magnet 423 includes a first magnetic pole 4231, a second magnetic pole 4232, a third magnetic pole 4233, and a fourth magnetic pole 4234, the first magnetic pole 4231 and the second magnetic pole 4232 have opposite polarities and are spaced apart at an end of the driving platform 421, an inner side of the first magnetic pole 4231 and an inner side of the second magnetic pole 4232 have opposite polarities, the third magnetic pole 4233 and the fourth magnetic pole 4234 are spaced apart at another end of the driving platform 421, an inner side of the third magnetic pole 4233 and an inner side of the second magnetic pole 4232 have opposite polarities, the inner side of the first magnetic pole 4231 and the inner side of the third magnetic pole 4233 have identical polarities and are arranged close to the driving coil 41, and the inner side of the second magnetic pole 4232 and the inner side of the fourth magnetic pole 4234 have identical polarities and are arranged away from the driving coil 41; and the magnetically conductive plate includes a first magnetically conductive plate and a second magnetically conductive plate, an end of the first magnetically conductive plate is connected to an end of the driving coil 41, another end of the first magnetically conductive plate is arranged between the first magnetic pole 4231 and the second magnetic pole 4232, an end of the second magnetically conductive plate is connected to another end of the driving coil 41, and another end of the second magnetically conductive plate is arranged between the third magnetic pole 4233 and the fourth magnetic pole 4234.

For example, the inner side of the first magnetic pole 4231 is the N polarity, the inner side of the second magnetic pole 4232 is the S polarity, the inner side of the third magnetic pole 4233 is the N polarity, the inner side of the fourth magnetic pole 4234 is the S polarity, the first magnetic pole 4231 and the second magnetic pole 4232 are arranged at a same end of the driving platform 421, and the third magnetic pole 4233 and the fourth magnetic pole 4234 are arranged at another end of the driving platform 421. When the driving coil 41 is electrified in a first current direction, the first magnetic pole 4231 is magnetically attracted to the first magnetically conductive plate, and the third magnetic pole 4233 is magnetically attracted to the second magnetically conductive plate. When the driving coil is electrified in a second current direction, the second magnetic pole 4232 is magnetically attracted to the first magnetically conductive plate, and the fourth magnetic pole 4234 is magnetically attracted to the second magnetically conductive plate. The first current direction and the second current direction are opposite to each other.

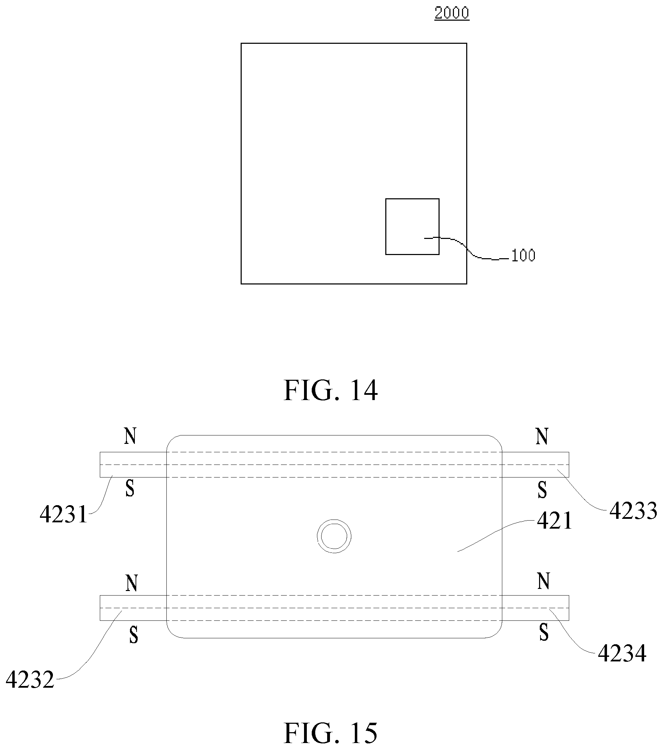

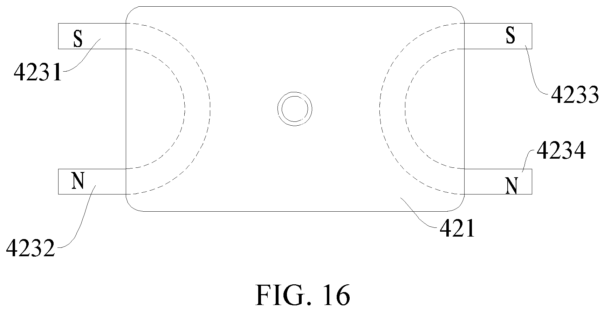

It may be understood that, the inner sides of the first magnetic pole 4231 and the third magnetic pole 4233 refer to opposite sides of the first magnetic pole 4231 and the third magnetic pole 4233; and the inner sides of the second magnetic pole 4232 and the fourth magnetic pole 4234 refer to opposite sides of the second magnetic pole 4232 and the fourth magnetic pole 4234. In the embodiment shown in FIG. 15, the permanent magnet 423 is constructed as a plate-shaped magnet, whose polarity is distributed as above. In the embodiment shown in FIG. 16, the permanent magnet 423 is constructed as a U-shaped magnet, and opening ends are two magnetic poles, whose polarities are distributed as above.

the driving platform 421 is constructed as an insulting member or the driving platform 421 is coated with an insulting layer. In this way, the second conduction section 32 is arranged on the connection bracket 422, and correspondingly the driving platform 421 is an insulting member or coated with an insulting layer, which may improve the high-voltage and low-voltage isolation effect between the high-voltage conduction part and the low-voltage control part, prevent high-voltage breakdown from causing the low-voltage failure, and improve the operating stability of the contactor 100.

As shown in FIG. 3 and FIG. 5, according to some embodiments of the present invention, the conducting bar 30 further includes: a flexible connection piece 33, the flexible connection piece 33 connects the first conduction section 31 to the second conduction section 32 and is located between the first conduction section 31 and the second conduction section 32, and the second conduction section 32 is swingable relative to the flexible connection piece 33 to move toward or away from the second wiring terminal 20.

Two ends of the flexible connection piece 33 are separately connected to the first conduction section 31 and the second conduction section 32, the flexible connection piece 33 may be bent to enable the second conduction section 32 to move toward or away from the second wiring terminal 20, thereby improving convenience of switching of the contactor 100 between the first position and the second position. In addition, the arrangement of the flexible connection piece 33 may reduce the bending wear of the conducting bar 30, to prolong the service life of the conducting bar 30, and further increase the service life of the contactor 100.

The flexible connection piece 33 is provided with an arc-shaped groove 331, and the arc-shaped groove 331 runs through the flexible connection piece 33 in a height direction of the conducting bar 30. In this way, by setting a clearance, when the flexible connection piece 33 is bent, some bending deformation may be absorbed through deformation of the arc-shaped groove 331, to reduce the bending wear of the flexible connection piece 33, to effectively increase the service life of the conducting bar 30.

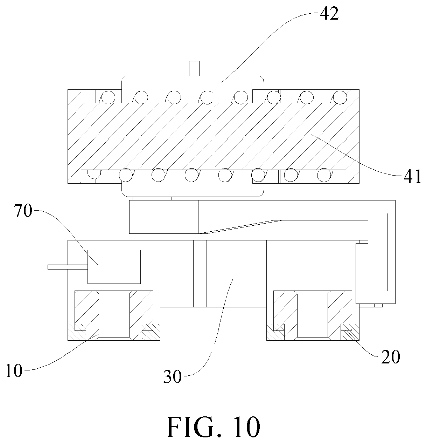

As shown in FIG. 10, in some embodiments, the contactor 100 further includes: a sensor 70, the sensor 70 being arranged close to the first wiring terminal 10 or the second wiring terminal 20 or the conducting bar 30 and configured to detect a circuit signal of the first wiring terminal 10 or the second wiring terminal 20 or the conducting bar 30 in real time; and a controller, the controller being electrically connected to the sensor 70 and configured to control the driving assembly 40 according to the circuit signal to interrupt or close the contactor 100.

In this way, by arranging the controller and the sensor 70, as the first wiring terminal 10 is conducted to the second wiring terminal 20 through the conducting bar 30, a high-voltage loop has both the current and the heat changed, and correspondingly has the temperature changed, and the sensor 70 may obtain change information (temperature change, current change, and the like) of the high-voltage loop during operating, and transmit the change information to the controller in the form of a circuit signal. The controller determines, according to the circuit signal, whether a cutoff threshold (a temperature threshold, a voltage threshold, or a current threshold) of the high-voltage loop is reached, and controls, when it is necessary to interrupt the high-voltage loop, the driving assembly 40 to interrupt the electric connection between the conduction section 32 and the second wiring terminal 20. It is unnecessary to arrange a fuse, to reduce high-voltage loss and reduce costs. In addition, after the contactor 100 is controlled and interrupted, even when electric equipment for which the contactor 100 of the present invention is used needs to continue operating, it may be ensured that a high voltage may be applied to the electric equipment and safety may be improved.

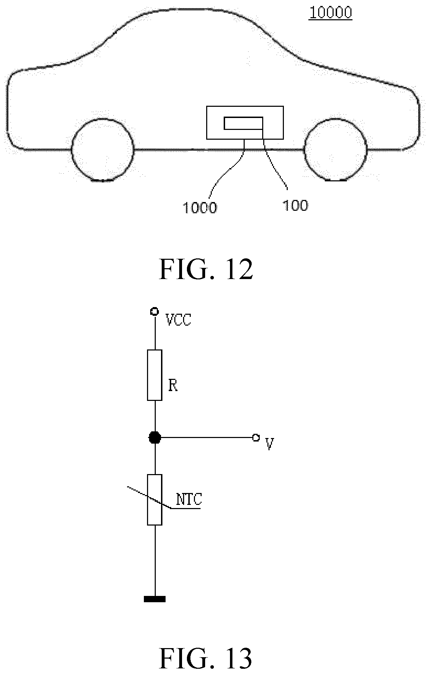

As shown in FIG. 13, a principle of conversion between a thermosensitive resistance and its corresponding voltage is: V=(NTC/(NTC+R))×VCC, where V is an input voltage, VCC is a standard voltage, R is a fixed resistance, and NTC is a thermosensitive resistance. Therefore, a manner of calculating a circuit signal AD is: AD=(V/VCC)×2n=(NTC/(NTC+R))×2n.

In this way, by obtaining a voltage value for a thermosensitive resistance, a required circuit signal may be obtained through conversion.

It should be noted that, after the fuse blows, the high-voltage circuit is thoroughly interrupted. However, in the present invention, by arranging the controller and the sensor 70, even if the high-voltage current needs to be interrupted based on the information obtained by the sensor 70, the high-voltage current may still be applied to increase safety under a maximum condition. For example, the contactor 100 of the present invention is applied to an electric vehicle 10000. When circuit information indicates that it is necessary to interrupt the contactor 100 but the vehicle 10000 is in a dangerous situation and needs to maintain an operating condition, a state of applying the high-voltage current may be maintained, and the electric connection between the conduction section 32 and the second wiring terminal 20 is interrupted after the vehicle travels to a safe position or is released from the dangerous situation.

The controller is configured to obtain a temperature or a voltage or a current of the first wiring terminal 10 or the second wiring terminal 20 or the conducting bar 30 according to the circuit signal; and

the controller is configured to interrupt the electric connection between the second conduction section 32 and the second wiring terminal 20 when the first wiring terminal 10 or the second wiring terminal 20 or the conducting bar 30 has the temperature greater than a first temperature threshold, and /or the voltage greater than a first voltage threshold, and /or the current greater than a first current threshold.

The controller is further configured to close the electric connection between the second conduction section 32 and the second wiring terminal 20 when the first wiring terminal 10 or the second wiring terminal 20 or the conducting bar 30 has the temperature less than a second temperature threshold, and /or the voltage less than a second voltage threshold, and /or the current less than a second current threshold, where the second temperature threshold is less than or equal to the first temperature threshold, the second voltage threshold is less than or equal to the first voltage threshold, and the second current threshold is less than or equal to the first current threshold.

That is to say, in the contactor 100 of the present invention, by arranging the sensor and the controller, when the high-voltage circuit to which the contactor 100 is connected has the voltage exceeding the set first voltage threshold, the current exceeding the set first current threshold, or the temperature exceeding the set first temperature threshold, the contactor 100 may be interrupted, to improve use safety of the contactor 100 and reduce potential safety hazards of the high-voltage circuit, and the contactor 100 may be prevented from burning out.

Then, when the high-voltage circuit to which the contactor 100 is connected has the voltage reduced to be less than the set second voltage threshold, the current reduced to be less than the set first current threshold, or the temperature reduced to be less than the set first temperature threshold, the contactor 100 may be controlled to close again, so that the high-voltage circuit to which the contactor 100 is connected may be switched to the operating state in time, which may effectively improve the use safety and reduce the property loss.

As shown in FIG. 1, according to some embodiments of the present invention, the contactor further includes: a housing 50, the housing 50 defining an accommodating space, the conducting bar 30, the first wiring terminal 10, the second wiring terminal 20, and the driving assembly 40 being all arranged in the accommodating space, and the first wiring terminal 10 and the second wiring terminal 20 at least partially extending from the housing 50. In this way, the arrangement of the housing 50 may isolate the driving assembly 40 from the external environment, and may reduce interference from the external environment to the driving coil 41 and the micro-switch 42 and increase control response efficiency of the low-voltage control part while increasing the operating stability.

A low-voltage signal terminal 60 is further arranged outside the housing 50, and the low-voltage signal terminal 60 is arranged on the housing 50 in a pluggable manner and is connected to the driving coil 41. In some embodiments, the housing 50 is provided with a bundle leading-out opening, and the low-voltage signal terminal 60 is led out of the housing through the bundle leading-out opening. In some other embodiments, the low-voltage signal terminal 60 is fixed on the housing 50 in a pluggable form, the housing 50 is correspondingly provided with a plugging opening, and a metal wire is led into the housing 50 from the plugging opening and is electrically connected to the driving coil 41, so that the appearance of the contactor 100 of the present invention is maintained in consistency with that of the conventional contactor 100, to facilitate structural design and material switching, and the research and development cycle and the development costs may be reduced.

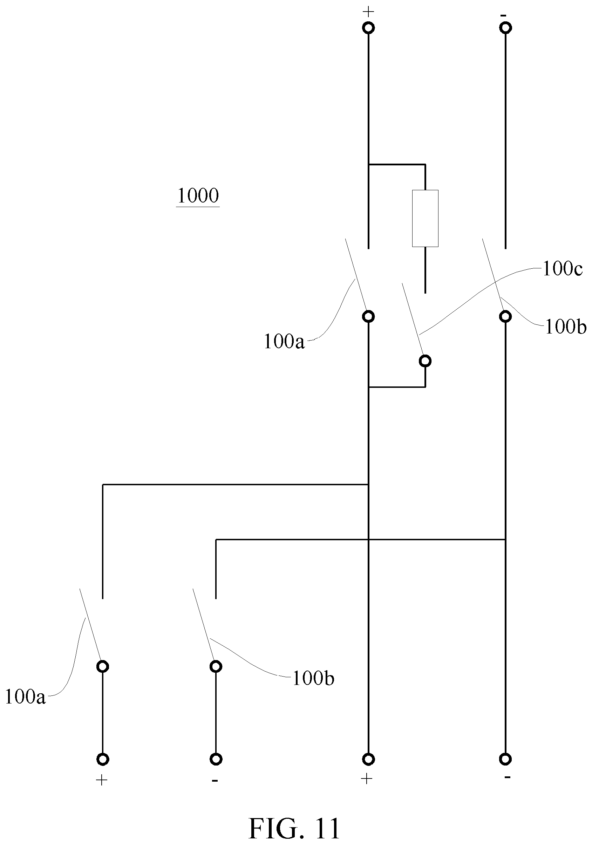

As shown in FIG. 11, a vehicle charging and power distribution system 1000 according to an embodiment of a second aspect of the present invention includes: a positive contactor 100a, a negative contactor 100b, and a pre-charging circuit contactor 100c, one or more of the positive contactor 100a, the negative contactor 100b, and the pre-charging circuit contactor 100c being constructed as the contactor 100 in the foregoing embodiments.

The vehicle charging and power distribution system 1000 includes: a battery end interface, an electric control end interface, and a direct-current charging interface. A charging loop is formed between the direct-current charging interface and the battery end interface, and a power distribution loop is formed between the electric control end interface and the battery end interface, and configured to provide electric energy for a vehicle. A positive contactor 100a is arranged on each of a positive side of the direct-current charging interface and a positive side of the battery end interface. A negative contactor 100b is arranged on each of a negative side of the direct-current charging interface and a negative side of the battery end interface. A pre-charging circuit is further arranged on the positive side of the battery end interface, and a pre-charging circuit contactor 100c connected in series to a pre-charging resistor and connected in parallel to the positive contactor 100a is arranged on the pre-charging circuit.

The foregoing contactor 100 is used for the vehicle charging and power distribution system 1000 according to this embodiment of the present invention, which may improve the operating stability and the use safety of the vehicle charging and power distribution system 1000, and prolong the service life.

As shown in FIG. 14, the contactor 100 in the foregoing embodiments is used for a charging pile 2000 according to an embodiment of a third aspect of the present invention.

The foregoing contactor 100 in the foregoing embodiments is used for the charging pile 2000 according to this embodiment of the present invention, which may improve the use safety of the charging pile 2000.

As shown in FIG. 12, the contactor 100 in the foregoing embodiments is used for a vehicle 10000 according to an embodiment of a third aspect of the present invention.

The foregoing contactor 100 in the foregoing embodiments is used for the vehicle 10000 according to this embodiment of the present invention, and on-board electric equipment performs electric connection and control through the contactor 100, which may increase the use safety of the vehicle 10000.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present invention. In this specification, schematic descriptions of the foregoing terms do not necessarily refer to the same embodiment or example. Moreover, the specific features, structures, materials, or characteristics described may be combined in any one or more embodiments or examples in an appropriate manner.

Although the embodiments of the present invention have been shown and described, a person of ordinary skill in the art should understand that various changes, modifications, replacements and variations may be made to the embodiments without departing from the principles of the present invention, and the scope of the present invention is as defined by the appended claims.

The reference numerals in the specification are as follow:
Vehicle 10000,
Charging and power distribution system 1000, Charging pile 2000,
Contactor 100, Positive contactor 100a, Negative contactor 100b, Pre-charging circuit contactor 100c,
First wiring terminal 10, Second wiring terminal 20,
Conducting bar 30, First conduction section 31, Second conduction section 32, Flexible connection piece 33, Arc-shaped groove 331,
Driving assembly 40, Driving coil 41, Micro-switch 42, Driving platform 421, Connection bracket 422, Permanent magnet 423, First magnetic pole 4231, Second magnetic pole 4232, Third magnetic pole 4233, Fourth magnetic pole 4234, Clamping piece 424,
Housing 50, Low-voltage signal terminal 60, and Sensor 70.

## Claims

1. A contactor for a vehicle, comprising:
a first wiring terminal (10);
a second wiring terminal (20);
a conducting bar (30), the conducting bar (30) comprising a first conduction section (31) and a second conduction section (32), the first conduction section (31) and the second conduction section (32) being connected to each other and being revolvable with respect to each other, the first conduction section (31) being fixed on the first wiring terminal (10), and the second conduction section (32) being optionally electrically connected to or electrically disconnected from the second wiring terminal (20); and
a driving assembly (40), the driving assembly (40) being configured to drive the second conduction section (32) to move toward or away from the second wiring terminal (20), wherein
the first wiring terminal (10) and the second wiring terminal (20) are respectively arranged opposite to the conducting bar (30) in a first direction, at least one of the conducting bar (30), the first wiring terminal (10), and the second wiring terminal (20) is arranged opposite to the driving assembly (40) in a second direction, and the first direction is orthogonal to the second direction;
wherein the driving assembly (40) comprises: a micro-switch (42) and a driving coil (41), the micro-switch (42) is configured to swing about a fixed axis under action of a magnetic force of the driving coil (41), the micro-switch (42) is configured to drive the second conduction section (32) to move toward or away from the second wiring terminal (20),
**characterised in that**
the micro-switch (42) is arranged opposite to the driving coil (41) in the first direction,
the driving coil (41) is arranged opposite to the first wiring terminal (10) and the second wiring terminal (20) in the second direction, and the micro-switch (42) is arranged opposite to the conducting bar (30) in the second direction.

2. The contactor for a vehicle according to claim 1, wherein the micro-switch (42) comprises: a driving platform (421) and a connection bracket (422), an end of the connection bracket (422) is connected to the driving platform (421), another end of the connection bracket (422) is connected to the second conduction section (32), the driving platform (421) is configured to swing under action of a magnetic force of the driving coil (41), and the driving platform (421) is configured to drive the connection bracket (422) to swing and then drive the second conduction section (32) to move toward or away from the second wiring terminal (20).

3. The contactor for a vehicle according to claim 2, wherein a connection area between the first conduction section (31) and the second conduction section (32) is arranged opposite to the driving platform (421) in the second direction.

4. The contactor for a vehicle according to claim 3, wherein the another end of the connection bracket (422) is connected to an end of the second conduction section (32) away from the first conduction section (31), or the another end of the connection bracket (422) is connected to another end of the second conduction section (32) close to the first conduction section (31).

5. The contactor for a vehicle according to claim 3, wherein a clamping piece (424) is formed at the another end of the connection bracket (422), and the clamping piece (424) clamps an end of the second conduction section (32) away from the first conduction section (31); or the clamping piece (424) clamps another end of the second conduction section (32) close to the first conduction section (31).

6. The contactor for a vehicle according to claim 3, wherein a permanent magnet (423) is arranged on each of four corner areas of the driving platform (421), a magnetically conductive plate is arranged at each of two ends of the driving coil (41), the magnetically conductive plate at an end of the driving coil (41) is configured to attract the two permanent magnets (423) at an end of the driving platform (421), the magnetically conductive plate at another end of the driving coil (41) is configured to attract the two permanent magnets (423) at another end of the driving platform (421), and inner sides of the two permanent magnets (423) located at a same end of the driving platform (421) have opposite polarities.

7. The contactor for a vehicle according to any one of the preceding claims, wherein the conducting bar (30) further comprises: a flexible connection piece (33), the flexible connection piece (33) connects the first conduction section (31) to the second conduction section (32) and is located between the first conduction section (31) and the second conduction section (32), and the second conduction section (32) is swingable relative to the flexible connection piece (33) to move toward or away from the second wiring terminal (20).

8. The contactor for a vehicle according to claim 7, wherein the flexible connection piece (33) is provided with an arc-shaped groove (331), and the arc-shaped groove (331) runs through the flexible connection piece (33) in a height direction of the conducting bar (30).

9. The contactor for a vehicle according to any one of the preceding claims, further comprising: a sensor (70), the sensor (70) being arranged close to the first wiring terminal (10) or the second wiring terminal (20) or the conducting bar (30) and configured to detect a circuit signal of the first wiring terminal (10) or the second wiring terminal (20) or the conducting bar (30) in real time; and
a controller, the controller being electrically connected to the sensor (70) and configured to control the driving assembly (40) according to the circuit signal to interrupt or close an electric connection between the second conduction section (32) and the second wiring terminal (20).

10. The contactor for a vehicle according to claim 9, wherein the controller is configured to obtain a temperature or a voltage or a current of the first wiring terminal (10) or the second wiring terminal (20) or the conducting bar (30) according to the circuit signal; and
the controller is configured to interrupt the electric connection between the second conduction section (32) and the second wiring terminal (20) when the first wiring terminal (10) or the second wiring terminal (20) or the conducting bar (30) has the temperature greater than a first temperature threshold, or the voltage greater than a first voltage threshold, or the current greater than a first current threshold.

11. The contactor for a vehicle according to any one of the preceding claims, further comprising: a housing (50), the housing (50) defining an accommodating space, the conducting bar (30), the first wiring terminal (10), the second wiring terminal (20), and the driving assembly (40) being all arranged in the accommodating space, and the first wiring terminal (10) and the second wiring terminal (20) at least partially extending from the housing (50).

12. A vehicle charging and power distribution system, comprising: a positive contactor (100a), a negative contactor (100b), and a pre-charging circuit contactor (100c), one or more of the positive contactor (100a), the negative contactor (100b), and the pre-charging circuit contactor (100c) being constructed as the contactor (100) according to any one of the preceding claims.

13. A charging pile, comprising: the contactor (100) according to any one of the preceding claims 1 to 11.

14. A vehicle, comprising: the contactor (100) according to any one of claims 1 to 11.

## Patentansprüche

1. Schütz für ein Fahrzeug, umfassend:
einen ersten Verdrahtungsanschluss (10);
einen zweiten Verdrahtungsanschluss (20);
eine leitende Schiene (30), wobei die leitende Schiene (30) einen ersten Leitungsabschnitt (31) und einen zweiten Leitungsabschnitt (32) umfasst, wobei der erste Leitungsabschnitt (31) und der zweite Leitungsabschnitt (32) miteinander verbunden sind und in Bezug aufeinander drehbar sind, wobei der erste Leitungsabschnitt (31) an dem ersten Verdrahtungsanschluss (10) befestigt ist und der zweite Leitungsabschnitt (32) wahlweise elektrisch mit dem zweiten Verdrahtungsanschluss (20) verbunden oder von diesem elektrisch getrennt ist; und
eine Antriebsbaugruppe (40), wobei die Antriebsbaugruppe (40) dazu konfiguriert ist, den zweiten Leitungsabschnitt (32) so anzutreiben, dass er sich zu dem zweiten Verdrahtungsanschluss (20) hin oder von diesem weg bewegt, wobei
der erste Verdrahtungsanschluss (10) und der zweite Verdrahtungsanschluss (20) jeweils gegenü ber der leitenden Schiene (30) in einer ersten Richtung angeordnet sind, mindestens einer der leitenden Schiene (30), des ersten Verdrahtungsanschlusses (10) und des zweiten Verdrahtungsanschlusses (20) gegenüber der Antriebsbaugruppe (40) in einer zweiten Richtung angeordnet ist, und die erste Richtung orthogonal zur zweiten Richtung ist;
wobei die Antriebsbaugruppe (40) Folgendes umfasst: einen Mikroschalter (42) und eine Antriebsspule (41), wobei der Mikroschalter (42) dazu konfiguriert ist, unter der Wirkung einer Magnetkraft der Antriebsspule (41) um eine feste Achse zu schwingen, wobei der Mikroschalter (42) dazu konfiguriert ist, den zweiten Leitungsabschnitt (32) so anzutreiben, dass er sich auf den zweiten Verdrahtungsanschluss (20) zu oder von ihm weg bewegt,
**dadurch gekennzeichnet, dass**
der Mikroschalter (42) gegenüber der Antriebsspule (41) in der ersten Richtung angeordnet ist, die Antriebsspule (41) gegenüber dem ersten Verdrahtungsanschluss (10) und dem zweiten Verdrahtungsanschluss (20) in der zweiten Richtung angeordnet ist, und der Mikroschalter (42) gegenüber der leitenden Schiene (30) in der zweiten Richtung angeordnet ist.

2. Schütz für ein Fahrzeug gemäß Anspruch 1, wobei der Mikroschalter (42) umfasst: eine Antriebsplattform (421) und einen Verbindungsbügel (422), wobei ein Ende des Verbindungsbügels (422) mit der Antriebsplattform (421) verbunden ist, ein anderes Ende des Verbindungsbügels (422) mit dem zweiten Leitungsabschnitt (32) verbunden ist, die Antriebsplattform (421) dazu konfiguriert ist, unter der Wirkung einer magnetischen Kraft der Antriebsspule (41) zu schwingen, und die Antriebsplattform (421) dazu konfiguriert ist, den Verbindungsbügel (422) zum Schwingen anzutreiben und dann den zweiten Leitungsabschnitt (32) anzutreiben, um sich zu dem zweiten Verdrahtungsanschluss (20) hin oder von ihm weg zu bewegen.

3. Schütz für ein Fahrzeug gemäß Anspruch 2, wobei ein Verbindungsbereich zwischen dem ersten Leitungsabschnitt (31) und dem zweiten Leitungsabschnitt (32) in der zweiten Richtung gegenüber der Antriebsplattform (421) angeordnet ist.

4. Schütz für ein Fahrzeug gemäß Anspruch 3, wobei das andere Ende des Verbindungsbügels (422) mit einem dem ersten Leitungsabschnitt (31) abgewandten Ende des zweiten Leitungsabschnitts (32) verbunden ist, oder das andere Ende des Verbindungsbügels (422) mit einem anderen, dem ersten Leitungsabschnitt (31) nahen Ende des zweiten Leitungsabschnitts (32) verbunden ist.

5. Schütz für ein Fahrzeug gemäß Anspruch 3, wobei an dem anderen Ende des Verbindungsbügels (422) ein Klemmstück (424) ausgebildet ist, und das Klemmstück (424) ein Ende des zweiten Leitungsabschnitts (32) von dem ersten Leitungsabschnitt (31) weg klemmt; oder das Klemmstück (424) ein anderes Ende des zweiten Leitungsabschnitts (32) nahe dem ersten Leitungsabschnitt (31) klemmt.

6. Schütz für ein Fahrzeug gemäß Anspruch 3, wobei ein Permanentmagnet (423) an jedem der vier Eckbereiche der Antriebsplattform (421) angeordnet ist, eine magnetisch leitfähige Platte an jedem der beiden Enden der Antriebsspule (41) angeordnet ist, die magnetisch leitfähige Platte an einem Ende der Antriebsspule (41) dazu konfiguriert ist, die beiden Permanentmagnete (423) an einem Ende der Antriebsplattform (421) anzuziehen, die magnetisch leitende Platte an einem anderen Ende der Antriebsspule (41) dazu konfiguriert ist, die beiden Dauermagnete (423) an einem anderen Ende der Antriebsplattform (421) anzuziehen, und die Innenseiten der beiden Dauermagnete (423), die sich an einem gleichen Ende der Antriebsplattform (421) befinden, entgegengesetzte Polaritäten aufweisen.

7. Schütz für ein Fahrzeug gemäß einem der vorhergehenden Ansprüche, wobei die leitende Schiene (30) ferner umfasst: ein flexibles Verbindungsstück (33), wobei das flexible Verbindungsstück (33) den ersten Leitungsabschnitt (31) mit dem zweiten Leitungsabschnitt (32) verbindet und zwischen dem ersten Leitungsabschnitt (31) und dem zweiten Leitungsabschnitt (32) angeordnet ist, und der zweite Leitungsabschnitt (32) relativ zu dem flexiblen Verbindungsstück (33) schwenkbar ist, um sich zu dem zweiten Verdrahtungsanschluss (20) hin oder von ihm weg zu bewegen.

8. Schütz für ein Fahrzeug gemäß Anspruch 7, wobei das flexible Verbindungsstück (33) mit einer bogenförmigen Nut (331) versehen ist, und die bogenförmige Nut (331) durch das flexible Verbindungsstück (33) in einer Höhenrichtung der Leiterschiene (30) verläuft.

9. Schütz für ein Fahrzeug gemäß einem der vorhergehenden Ansprüche, ferner umfassend: einen Sensor (70), wobei der Sensor (70) in der Nähe des ersten Verdrahtungsanschlusses (10) oder des zweiten Verdrahtungsanschlusses (20) oder der Stromschiene (30) angeordnet ist und dazu konfiguriert ist, ein Schaltsignal des ersten Verdrahtungsanschlusses (10) oder des zweiten Verdrahtungsanschlusses (20) oder der Stromschiene (30) in Echtzeit zu detektieren; und
eine Steuerung, wobei die Steuerung elektrisch mit dem Sensor (70) verbunden ist und dazu konfiguriert ist, die Antriebsanordnung (40) gemäß dem Schaltungssignal zu steuern, um eine elektrische Verbindung zwischen dem zweiten Leitungsabschnitt (32) und dem zweiten Verdrahtungsanschluss (20) zu unterbrechen oder zu schließen.

10. Schütz für ein Fahrzeug gemäß Anspruch 9, wobei die Steuerung dazu konfiguriert ist, eine Temperatur oder eine Spannung oder einen Strom des ersten Verdrahtungsanschlusses (10) oder des zweiten Verdrahtungsanschlusses (20) oder der Stromschiene (30) gemäß dem Schaltungssignal zu erhalten; und
die Steuerung dazu konfiguriert ist, die elektrische Verbindung zwischen dem zweiten Leitungsabschnitt (32) und dem zweiten Verdrahtungsanschluss (20) zu unterbrechen, wenn die Temperatur des ersten Verdrahtungsanschlusses (10) oder des zweiten Verdrahtungsanschlusses (20) oder der leitenden Schiene (30) größer als ein erster Temperaturschwellenwert ist, oder die Spannung größer als ein erster Spannungsschwellenwert ist, oder der Strom größer als ein erster Stromschwellenwert ist.

11. Schütz für ein Fahrzeug gemäß einem der vorhergehenden Ansprüche, ferner umfassend: ein Gehäuse (50), wobei das Gehäuse (50) einen Aufnahmeraum definiert, wobei die Stromschiene (30), die erste Verdrahtungsklemme (10), die zweite Verdrahtungsklemme (20) und die Antriebsbaugruppe (40) alle in dem Aufnahmeraum angeordnet sind, und wobei die erste Verdrahtungsklemme (10) und die zweite Verdrahtungsklemme (20) zumindest teilweise aus dem Gehäuse (50) herausragen.

12. Fahrzeuglade- und Stromverteilungssystem, umfassend: ein positives Schütz (100a), ein negatives Schütz (1006) und ein Vorladeschaltungskontakt (100c), wobei eines oder mehrere von dem positiven Schütz (100a), dem negativen Schütz (100b) und dem Vorladeschaltungskontakt (100c) als das Schütz (100) gemäß einem der vorhergehenden Ansprüche ausgebildet sind.

13. Ladesäule, umfassend: das Schütz (100) nach einem der vorhergehenden Ansprüche 1 bis 11 .

14. Ein Fahrzeug, umfassend: das Schütz (100) gemäß einem der Ansprüche 1 bis 11.

## Revendications

1. Contacteur pour véhicule, comprenant :
une première borne de câblage (10) ;
une deuxième borne de câblage (20) ;
une barre conductrice (30), la barre conductrice (30) comprenant une première section de conduction (31) et une deuxième section de conduction (32), la première section de conduction (31) et la deuxième section de conduction (32) étant reliées l'une à l'autre et pouvant tourner l'une par rapport à l'autre, la première section de conduction (31) étant fixée sur la première borne de câblage (10), et la deuxième section de conduction (32) étant au choix connectée électriquement à la deuxième borne de câblage (20) ou déconnectée électriquement de cette dernière ; et
un ensemble d'entraînement (40), l'ensemble d'entraînement (40) étant configuré pour entraîner la deuxième section de conduction (32) afin qu'elle se rapproche ou s'éloigne de la deuxième borne de câblage (20), dans lequel
la première borne de câblage (10) et la deuxième borne de câblage (20) sont respectivement dispos ées à l'opposé de la barre conductrice (30) dans une première direction, au moins l'une de la barre conductrice (30), de la première borne de câblage (10) et de la deuxième borne de câblage (20) est disposée à l'opposé de l'ensemble d'entraînement (40) dans une deuxième direction, et la première direction est orthogonale à la deuxième direction ;
dans lequel l'ensemble d'entraînement (40) comprend : un micro-interrupteur (42) et une bobine d'entraînement (41), le micro-interrupteur (42) est configuré pour osciller autour d'un axe fixe sous l'action d'une force magnétique de la bobine d'entraînement (41), le micro-interrupteur (42) est configuré pour entraîner la deuxième section de conduction (32) afin qu'elle se rapproche ou s'éloigne de la deuxième borne de câblage (20),
**caractérisé par le fait que**
le micro-interrupteur (42) est disposé en face de la bobine motrice (41) dans la première direction, la bobine motrice (41) est disposée en face de la première borne de câblage (10) et de la deuxième borne de câblage (20) dans la deuxième direction, et le micro-interrupteur (42) est disposé en face de la barre conductrice (30) dans la deuxième direction.

2. Contacteur pour véhicule selon la revendication 1, dans lequel le micro-interrupteur (42) comprend : une plateforme d'entraînement (421) et une patte de connexion (422), une extrémité de la patte de connexion (422) est reliée à la plateforme d'entraînement (421), une autre extrémité de la patte de connexion (422) est reliée à la deuxième section de conduction (32), la plate-forme d'entraînement (421) est configurée pour osciller sous l'action d'une force magnétique de la bobine d'entraînement (41), et la plate-forme d'entraînement (421) est configurée pour entraîner le support de connexion (422) à osciller, puis pour entraîner la deuxième section de conduction (32) à se rapprocher ou à s'éloigner de la deuxième borne de câblage (20).

3. Contacteur pour véhicule selon la revendication 2, dans lequel une zone de connexion entre la première section de conduction (31) et la deuxième section de conduction (32) est disposée à l'opposé de la plateforme d'entraînement (421) dans la deuxième direction.

4. Contacteur pour véhicule selon la revendication 3, dans lequel l'autre extrémité de la patte de connexion (422) est reliée à une extrémité du deuxième tronçon de conduction (32) éloignée du premier tronçon de conduction (31), ou l'autre extrémité de la patte de connexion (422) est reliée à une autre extrémité du deuxième tronçon de conduction (32) proche du premier tronçon de conduction (31).

5. Contacteur pour véhicule selon la revendication 3, dans lequel une pièce de serrage (424) est formée à l'autre extrémité du support de connexion (422), et la pièce de serrage (424) serre une extrémité de la deuxième section de conduction (32) à distance de la première section de conduction (31) ; ou la pièce de serrage (424) serre une autre extrémité de la deuxième section de conduction (32) à proximité de la première section de conduction (31).

6. Contacteur pour véhicule selon la revendication 3, dans lequel un aimant permanent (423) est disposé sur chacune des quatre zones d'angle de la plateforme d'entraînement (421), une plaque magnétiquement conductrice est disposée à chacune des deux extrémités de la bobine d'entraînement (41), la plaque magnétiquement conductrice à une extrémité de la bobine d'entraînement (41) est configurée pour attirer les deux aimants permanents (423) à une extrémité de la plateforme d'entraînement (421), la plaque magnétiquement conductrice à une autre extrémité de la bobine d'entraînement (41) est configurée pour attirer les deux aimants permanents (423) à une autre extrémité de la plate-forme d'entraînement (421), et les côtés intérieurs des deux aimants permanents (423) situés à une même extrémité de la plate-forme d'entraînement (421) ont des polarités opposées.

7. Contacteur pour véhicule selon l'une quelconque des revendications précédentes, dans lequel la barre conductrice (30) comprend en outre : une pièce de connexion flexible (33), la pièce de connexion flexible (33) relie la première section de conduction (31) à la deuxième section de conduction (32) et est située entre la première section de conduction (31) et la deuxième section de conduction (32), et la deuxième section de conduction (32) est pivotante par rapport à la pièce de connexion flexible (33) pour se rapprocher ou s'éloigner de la deuxième borne de câblage (20).

8. Contacteur pour véhicule selon la revendication 7, dans lequel la pièce de connexion flexible (33) est prévue avec une rainure en forme d'arc (331), et la rainure en forme d'arc (331) traverse la pièce de connexion flexible (33) dans une direction de hauteur de la barre conductrice (30).

9. Le contacteur pour véhicule selon l'une quelconque des revendications précédentes, comprenant en outre : un capteur (70), le capteur (70) étant disposé à proximité de la première borne de câblage (10) ou de la deuxième borne de câblage (20) ou de la barre conductrice (30) et configuré pour détecter un signal de circuit de la première borne de câblage (10) ou de la deuxième borne de câblage (20) ou de la barre conductrice (30) en temps réel ; et
un contrôleur, le contrôleur étant connecté électriquement au capteur (70) et configuré pour commander l'ensemble d'entraînement (40) selon le signal de circuit afin d'interrompre ou de fermer une connexion électrique entre la deuxième section de conduction (32) et la deuxième borne de câblage (20).

10. Contacteur pour véhicule selon la revendication 9, dans lequel la commande est configurée pour obtenir une température ou une tension ou un courant de la première borne de câblage (10) ou de la deuxième borne de câblage (20) ou de la barre conductrice (30) selon le signal de circuit ; et
la commande est configurée pour interrompre la connexion électrique entre la deuxième section de conduction (32) et la deuxième borne de câblage (20) lorsque la première borne de câblage (10) ou la deuxième borne de câblage (20) ou la barre conductrice (30) présente une température supérieure à un premier seuil de température, ou une tension supérieure à un premier seuil de tension, ou un courant supérieur à un premier seuil de courant.

11. Contacteur pour véhicule selon l'une quelconque des revendications précédentes, comprenant en outre : un boîtier (50), le boîtier (50) définissant un espace de logement, la barre conductrice (30), la première borne de câblage (10), la deuxième borne de câblage (20), et l'ensemble d'entraînement (40) étant tous disposés dans l'espace de logement, et la première borne de câblage (10) et la deuxième borne de câblage (20) s'étendant au moins partiellement à partir du boîtier (50).

12. Système de charge et de distribution d'énergie pour véhicule, comprenant : un contacteur positif (100a), un contacteur négatif (100b), et un contacteur de circuit de précharge (100c), un ou plusieurs du contacteur positif (100a), du contacteur négatif (100b), et du contacteur de circuit de précharge (100c) étant construits comme le contacteur (100) selon l'une quelconque des revendications précédentes.

13. Pile de charge, comprenant : le contacteur (100) selon l'une quelconque des revendications précédentes 1 à 11 .

14. Véhicule, comprenant : le contacteur (100) selon l'une quelconque des revendications 1 à 11.
